# EUROPEAN PATENT SPECIFICATION

(11) **EP 0 331 745 B1**
(45) Date of publication and mention of the grant of the patent: **18.01.1995**
(21) Application number: 88907387.0
(22) Date of filing: 27.08.1988
(51) Int. Cl.: C07F 17/02, B01F 17/42, C09D 5/44

(54) **FERROCENE DERIVATIVES, SURFACTANTS CONTAINING SAME, AND PROCESS FOR PRODUCING THIN ORGANIC FILM**
FERROCENDERIVATE, OBERFLÄCHENAKTIVE MITTEL, DIE DIESE ENTHALTEN UND VERFAHREN ZUR HERSTELLUNG DÜNNER ORGANISCHER FILME
DERIVES DE FERROCENE, AGENTS TENSIO-ACTIFS CONTENANT DE TELS DERIVES ET PROCEDE DE PRODUCTION D'UN MINCE FILM ORGANIQUE

(30) Priority: 28.08.1987 JP 212718/87
(43) Date of publication of application: 13.09.1989
(73) Proprietor: IDEMITSU KOSAN COMPANY LIMITED, Tokyo 100 (JP)
(72) Inventor: SAJI, Tetsuo, Ohta-ku Tokyo 145 (JP)
(74) Representative: Türk, Gille, Hrabal, Leifert
(86) International application number: JP8800855
(87) International publication number: WO8901939

(56) References cited:
- DD-A- 234 274
- CHEMISTRY LETTERS, no. 7, July 1987, pages 1439-1442, The Chemical SocietyofJapan, JP; K. HOSHINO t al.: "Electrochemical formation of thin filmofviologen by distruption of micelles"
- JOURNAL OF THE CHEMICAL SOCIETY, CHEMICAL COMMUNUNICATIONS, no. 13, 1985,pages865-866; T. SAJI et al.: "Reversible formation and disruption of micellesbycontrol of the redox state of the surfactant tail group"
- JOURNAL OF THE AMERICAN CHEMICAL SOCIETY, vol. 109, no. 19, 16th September1987,pages 5881-5883, American Chemical Society; K. HOSHINO et al.:"Electrochemicalformation of an organic thin film by disruption of micelles"
- Lindner "Tenside-Textilhifsmittel-Waschrohstoffe", pp. 55, 875 and 898; Wissenschaftliche Verlagsgesellschaft Stuttgart 1964
- Chemistry Letters, No.4 (April 1988)Saji Tetsuo (Electrochemical formation of a phtalocyanine thin film by distruption of micellar aggregates) p. 693-696
- Applied Physics Letters, Vol. 52, No. 18 (1988), Harima Yutaka, et al (Phthalocyanine photoelectrochemical cell prepared by a micelle distruption method) p. 1542-1543

## Description

### Technical Field

The present invention relates to ferrocene derivatives, surfactants containing them and a process for producing organic thin films, and more particularly to novel ferrocene derivatives containing a polyoxyethylene chain, surfactants containing said ferrocene derivatives and capable of making coloring matter, e.g. phthalocyanine, soluble, and a process for producing a thin film of a hydrophobic organic substance using these surfactants.

### Background Art

In general, coloring matter such as phthalocyanine or its derivatives are insoluble in water, and although they are soluble in organic solvents such as dimethylformamide (DMF) or tetrahydrofuran (THF), their soluble amounts are small and the solubility is only several milligrams (mg).

Surfactants to dissolve phthalocyanine and the like in water have heretofore been investigated, but no satisfactory surfactant has been developed. It is reported that functional group-substituted phthalocyanine derivatives can be dissolved in water to some extent by using sulfone-based surfactants. However, the solubility is not always sufficiently high, and furthermore they cannot dissolve at all unsubstituted phthalocyanines.

In connection with water-insoluble polymers, surfactants to make them soluble in water have been investigated in the same manner as above. In fact, however, no satisfactory results have been obtained.

The present inventors have made extensive investigations to develop surfactants to make coloring matters such as phthalocyanine or its derivatives, or water-insoluble polymers and the like soluble in water.

In the course of the study, it has been found that ferrocene derivatives are promising as surfactants having the aforementioned performance. Such ferrocene surfactants are described in DD-A-234274 and Chemistry Letters pp. 1439-1442, 1987. As a result of further investigations based on the above findings, the present inventors have discovered that new ferrocene derivatives obtained by introducing a specified substituent containing a polyoxyethylene chain in ferrocene or its derivatives can achieve the object. At the same time, they have discovered that a water-insoluble (hydrophobic) organic thin film can be efficiently produced by applying an electrochemical technique using the above new ferrocene derivatives.

The present invention has been completed after the study as described above.

### Disclosure of Invention

That is, the present invention provides ferrocene derivatives represented by the general formula (I): 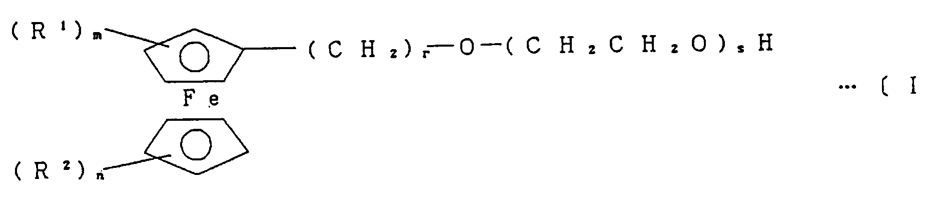
(wherein R¹ and R² are independently hydrogen, a methyl group, an ethyl group, a methoxy group or a carbomethoxy group, m is an integer of 1 to 4, n is an integer of 1 to 5, r is an integer of 11 to 18, and s is a real number of 2.0 to 70.0), or the general formula (II): 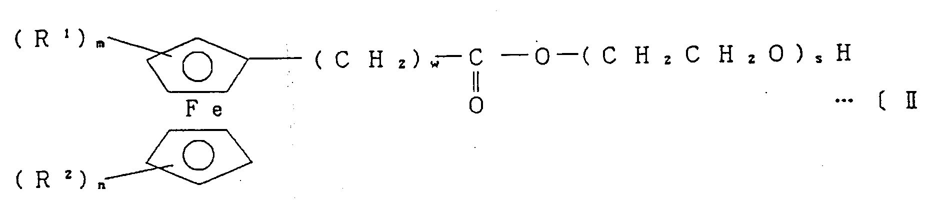
(wherein w is an integer of 2 to 20, and R¹, R², m, n and s are the same as above), and also provides, surfactants containing ferrocene derivatives represented by the general formula (I) or (II).

Moreover, the present invention provides a process for production of an organic thin film which comprises making a hydrophobic organic substance soluble in an aqueous medium with surfactants containing ferrocene derivatives represented by the general formula (I) or (II), and electrolyzing the resulting micelle solution to form a thin film of the above hydrophobic organic substance on an electrode.

### Brief Description of Drawings

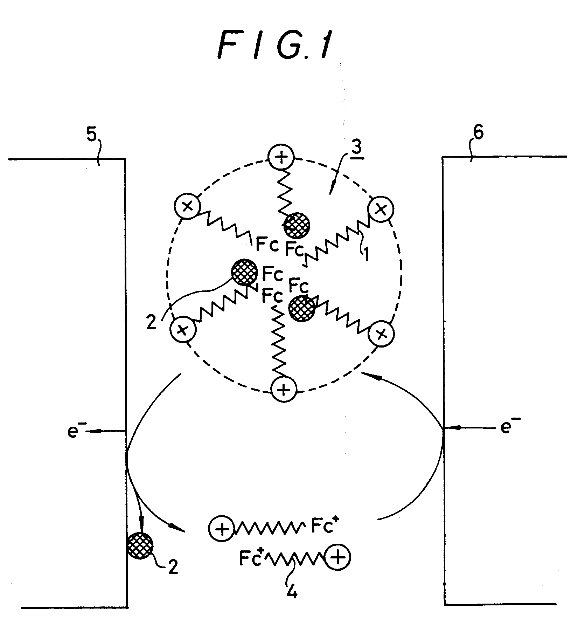

Fig. 1 is an explanation view schematically illustrating the principle of the process of the present invention, wherein 1 indicates a ferrocene derivative; 2, a hydrophobic organic substance; 3, a micelle; 4, an oxidized ferrocene derivative; 5, an anode; 6, a cathode; Fc, ferrocene; and e⁻, an electron.

Fi. 2 is a ¹H-NMR spectrum of the ferrocene derivative obtained in Example 1, Fig. 3 is a ¹H-NMR spectrum of the ferrocene derivative obtained in Example 2, Fig. 4 is a ¹H-NMR spectrum of the ferrocene derivative obtained in Example 3, Fig. 5 is a ¹H-NMR spectrum of the ferrocene derivative obtained in Example 5, Fig. 6 is a ¹H-NMR spectrum of the ferrocene derivative obtained in Example 5, Fig. 7 is a ¹H-NMR spectrum of the ferrocene derivative obtained in Example 6, and Fig. 8 is a ¹H-NMR spectrum of the ferrocene derivative obtained in Example 7.

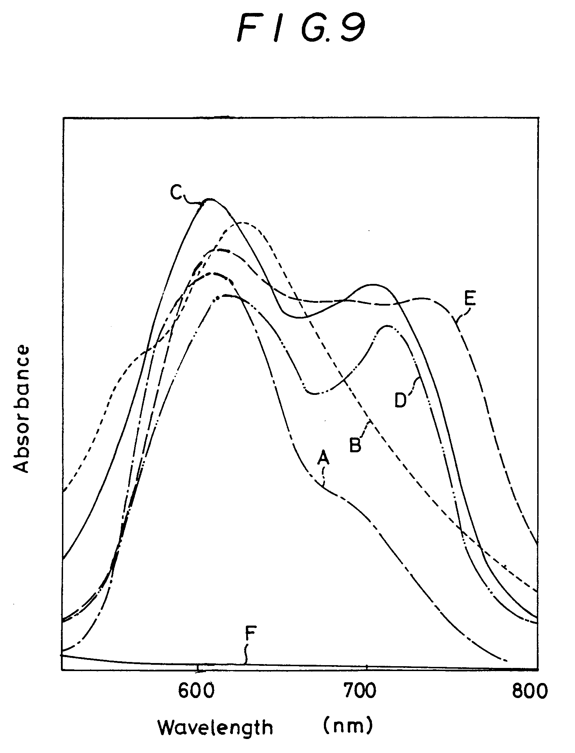

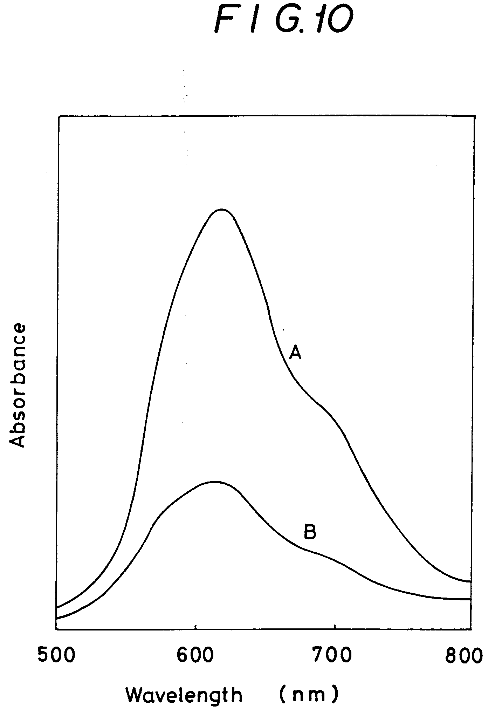

Fig. 9 is a visible absorption spectrum of the supernatants obtained in Examples 8 to 12, and Fig. 10 is a visible absorption spectrum of coloring matter thin films on ITO as obtained in Examples 13 and 14.

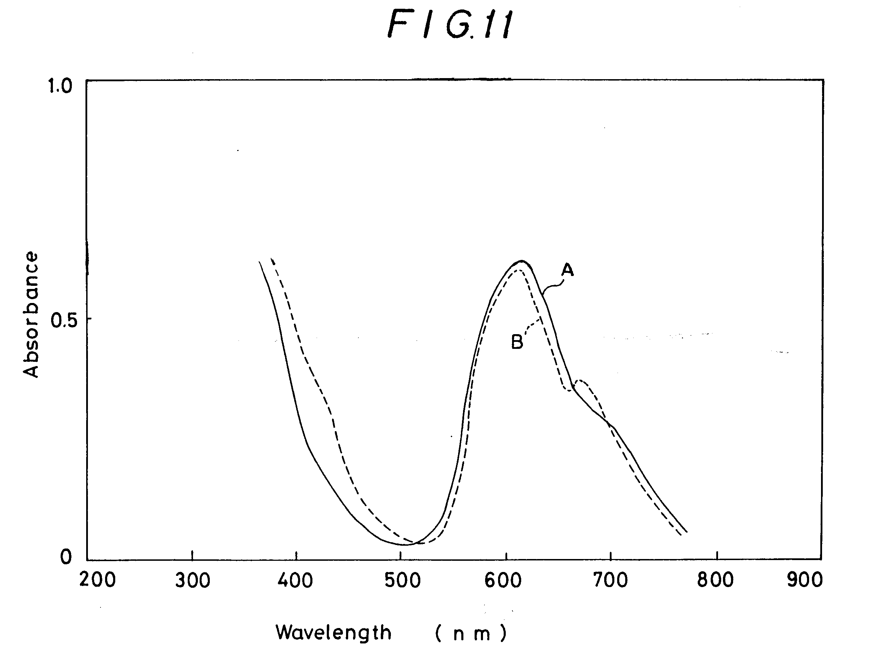

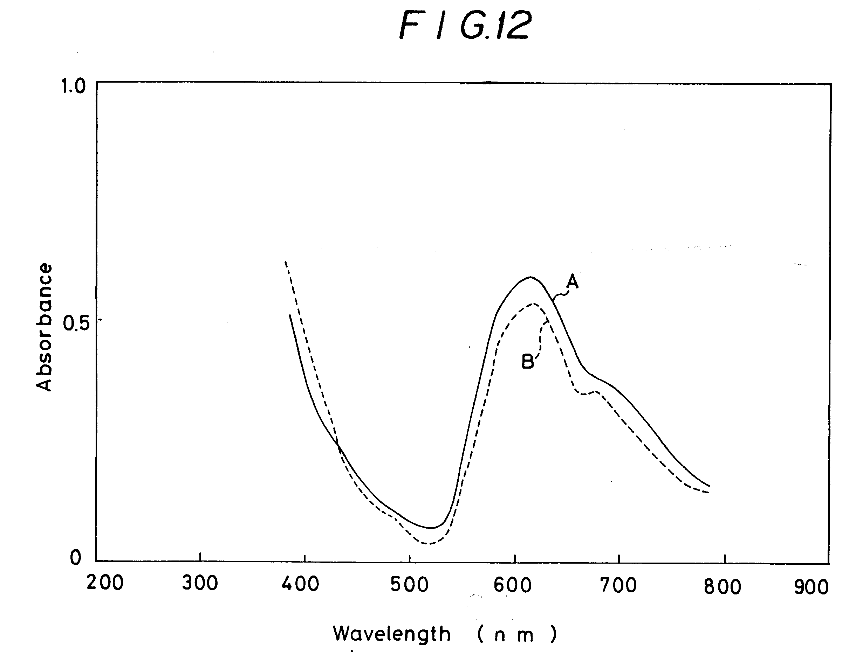

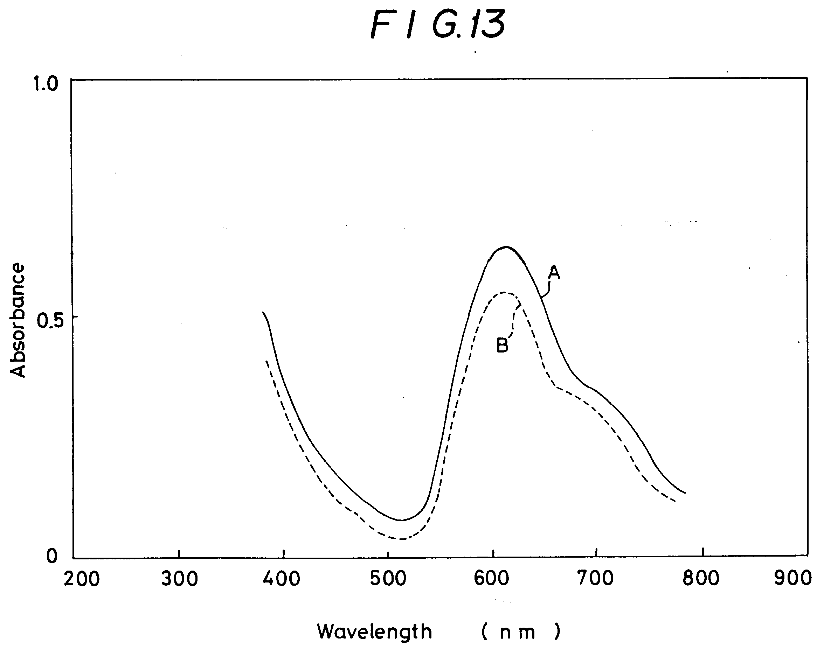

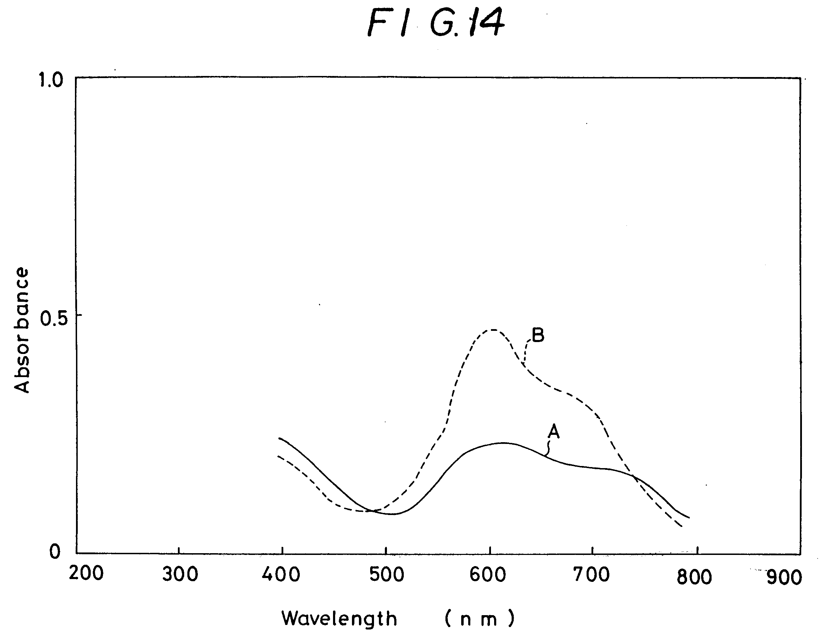

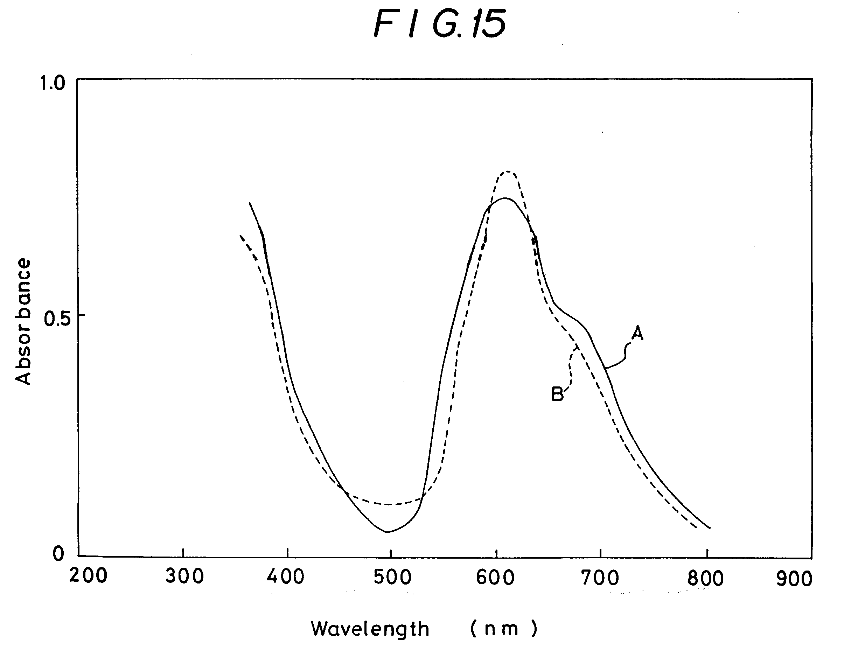

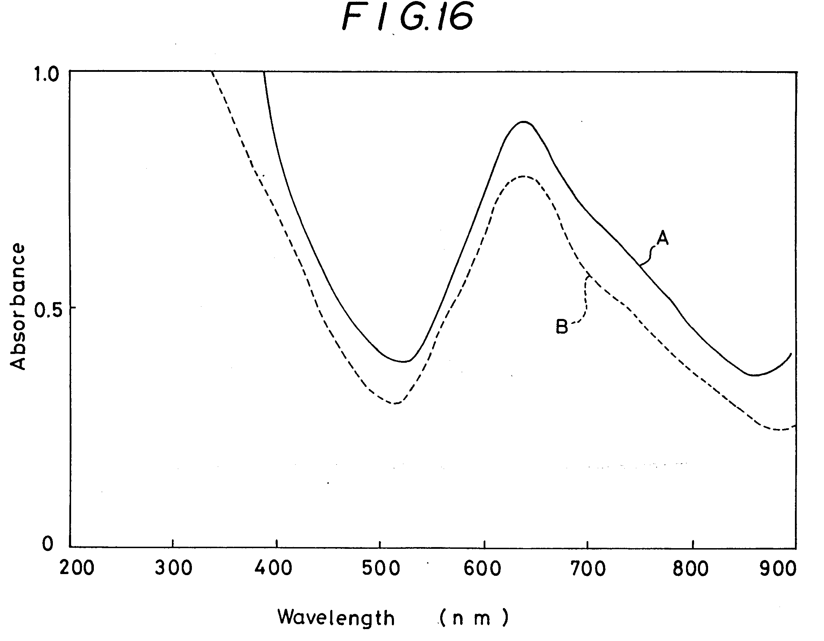

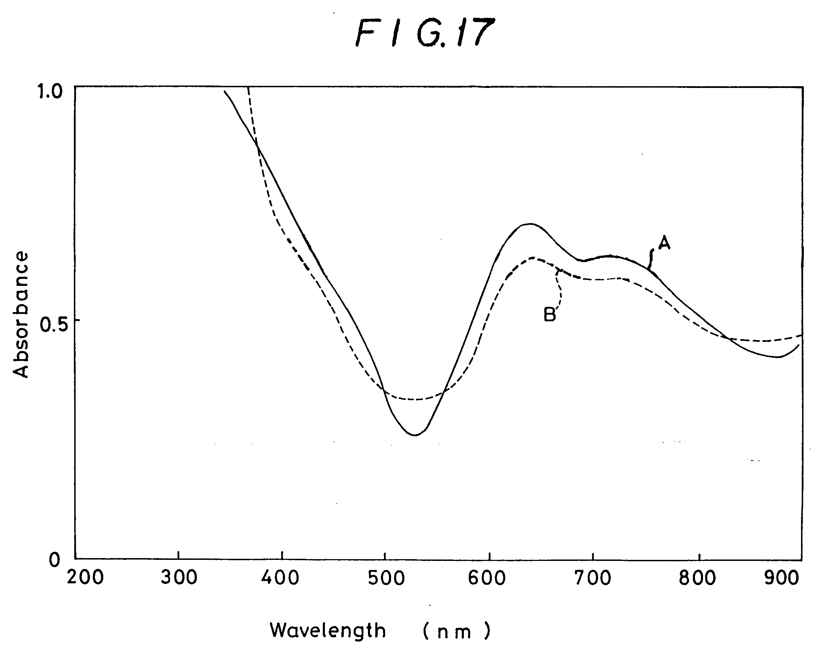

Fig. 11 indicates a visible absorption spectrum of the supernatant obtained in Example 15 and a visible absorption spectrum of the coloring matter thin film on ITO, Fig. 12 indicates a visible absorption spectrum of the supernatant obtained in Example 16 and a visible absorption spectrum of the coloring matter thin film on ITO, Fig. 13 indicates a visible absorption spectrum of the supernatant obtained in Example 13 and a visible absorption spectrum of the coloring matter thin film on ITO, Fig. 14 indicates a visible absorption spectrum of the supernatant obtained in Example 18 and a visible absorption spectrum of the coloring matter thin film on ITO, Fig. 15 indicates a visible absorption spectrum of the supernatant obtained in Example 19 and a visible absorption spectrum of the coloring matter thin film on ITO, Fig. 16 indicates a visible absorption spectrum of the supernatant obtained in Example 20 and a visible absorption spectrum of the coloring matter thin film on ITO, and Fig. 17 indicates a visible absorption spectrum of the supernatant obtained in Example 21 and a visible absorption spectrum of the coloring matter thin film on ITO.

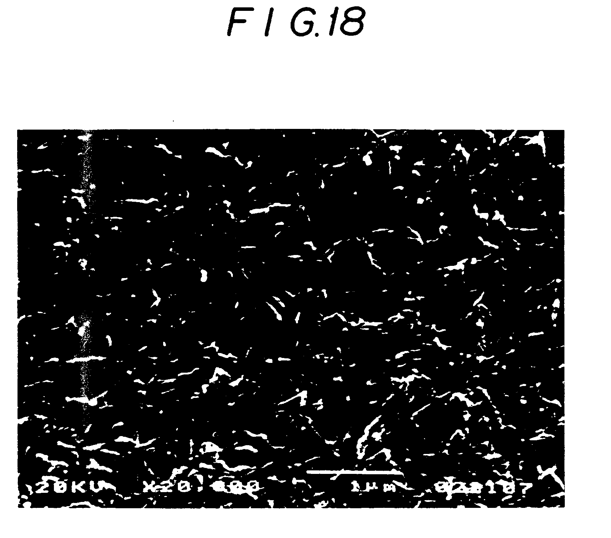

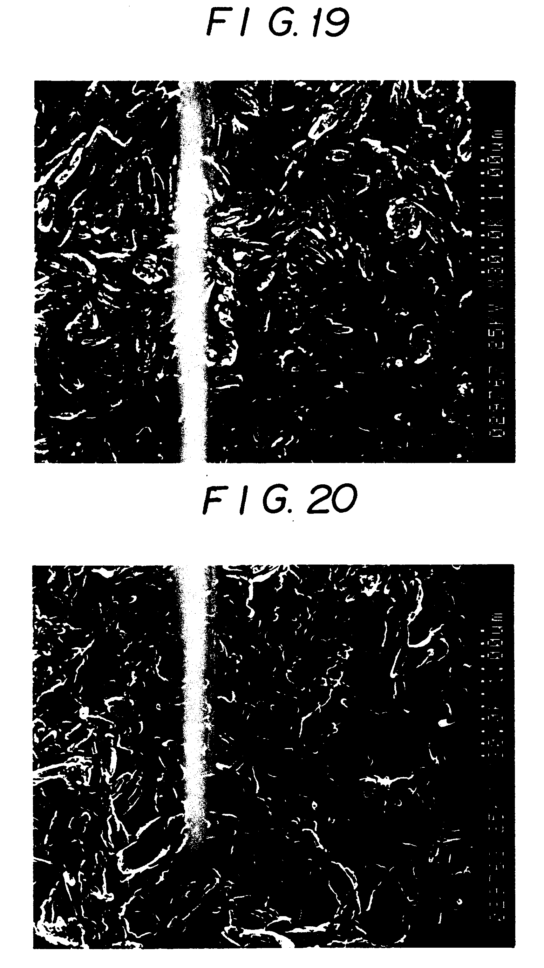

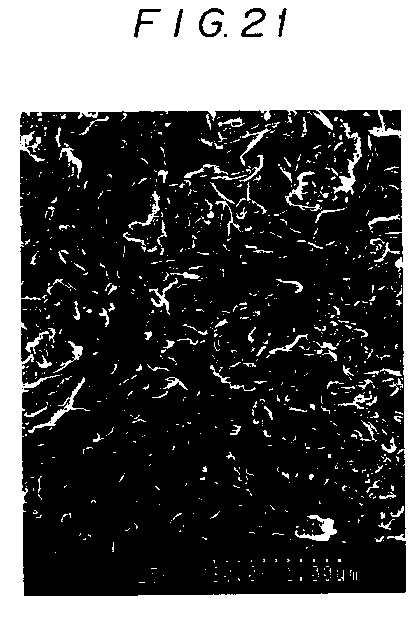

Fig. 18 is an SEM photograph illustrating the surface structure of the thin film formed in Example 13, Fig. 19 is an SEM photograph illustrating the surface structure of the thin film formed in Example 15, Fig. 20 is an SEM photograph illustrating the surface structure of the thin film formed in Example 16, and Fig. 21 is an SEM photograph illustrating the surface structure of the thin film formed in Example 17.

### Best Mode for Carrying Out The Invention

The ferrocene derivatives of the present invention are represented by the general formula (I) or (II). In the general formula (I), R¹ and R² are independently hydrogen, a methyl group, an ethyl group, a methoxy group or a carbomethoxy group, m is an integer of 1 to 4, n is an integer of 1 to 5, r is an integer of 11 to 18, and s is a real number of 2.0 to 70.0. Since r is, as described above, an integer of 11 to 18, an alkylene group (polymethylene group) having 11 to 18 carbon atoms, e.g. an undecamethylene group, a dodecamethylene group or a tridecamethylene group is present between a ring-constituting carbon atom and an ether oxygen atom nearest said carbon atom. s means not only an integer between 2.0 and 70.0 but also a real number including them, and indicates a mean value of a repeating number of an oxyethylene group (̵CH₂CH₂O)̵ constituting a ferrocene derivative.

On the other hand, since w of the general formula (II) indicates an integer of 2 to 20, an alkylene group (polymethylene group) having 2 to 20 carbon atoms, e.g. an ethylene group or a propylene group is present between a ring-constituting carbon atom and an oxycarbonyl group. R¹, R², m, n and s are the same as described above. These ferrocene derivatives represented by the general formula (I) or (II) can be prepared by various methods. For example, the ferrocene derivatives represented by the general formula (I) are prepared as follows. That is, an alkali metal (metallic sodium, metallic potassium, etc.) is added to polyethylene glycol represented by the general formula: 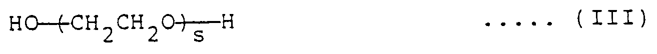
(wherein s is the same as described above), stirred at ordinary temperature to 200°C for several minutes to several days, and then a halogen-containing ferrocene compound represented by the general formula: 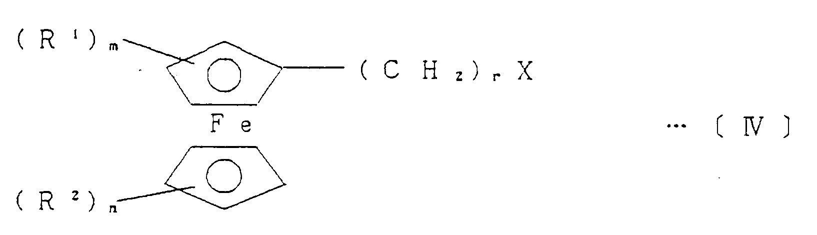
(wherein X is a halogen atom, and R¹, R², m, n and r are the same as described above) is added and reacted while stirring. Thereafter, upon extraction and purification, a ferrocene derivative represented by the general formula (I) is obtained. A halogen-containing ferrocene compound of the general formula (IV) can be prepared, for example, by converting ω-halogenocarboxylic acid represented by the general formula: HOOC(CH₂)ᵣ₋₁X
(wherein r and X are the same as described above) into acid halide (acylated product) represented by the general formula: X¹OC(CH₂)ᵣ₋₁X (wherein X¹ is a halogen atom resulting from a halogenating agent, and r and X are the same as described above) by the use of a suitable halogenating agent (thionyl chloride, etc.), reacting the acid halide with ferrocene or its derivative represented by the general formula: 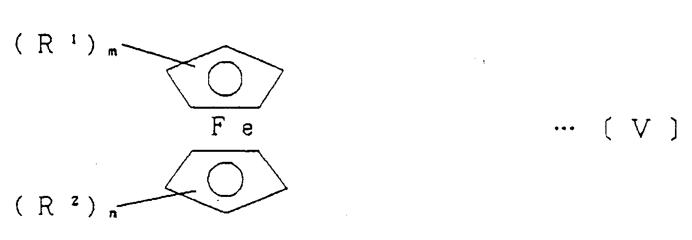
(wherein R¹, R², m and n are the same as described above) to obtain a ferrocenylketone derivative represented by the general formula: 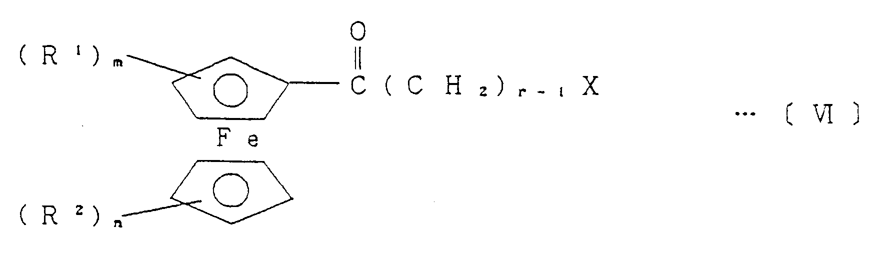
(wherein R¹, R², m, n and r are the same as described above), and further reducing the ferrocenylketone derivative.

On the other hand, a ferrocene derivative represented by the general formula (II) can be obtained by adding concentrated sulfuric acid to polyethylene glycol represented by the general formula (III), stirring at ordinary temperature to 200°C for several minutes, then adding a carboxyl group-containing ferrocene compound represented by the general formula: 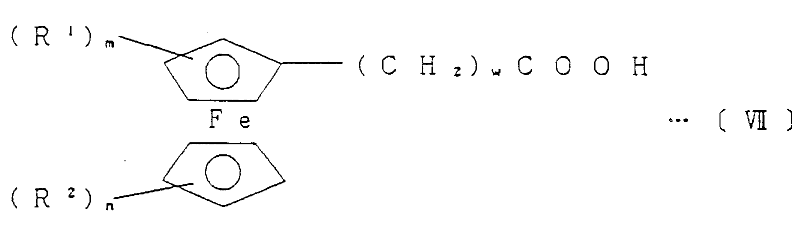
(wherein R¹, R², m, n and w are the same as described above) and reacting while stirring, and then extracting and purifying. A carboxyl group-containing ferrocene compound of the general formula (VII) can be prepared, for example, as follows: that is, the carboxyl group-containing ferrocene compound represented by the general formula (VII) can be prepared by reacting alkoxycarbonylic acid halide represented by the general formula: X²OC(CH₂)_{w-1}COOR (wherein X² is a halogen atom, R is an alkyl group, and w is the same as described above) with ferrocene or its derivative represented by the general formula (V) to obtain ferrocenoylcarboxylic acid ester represented by the general formula: 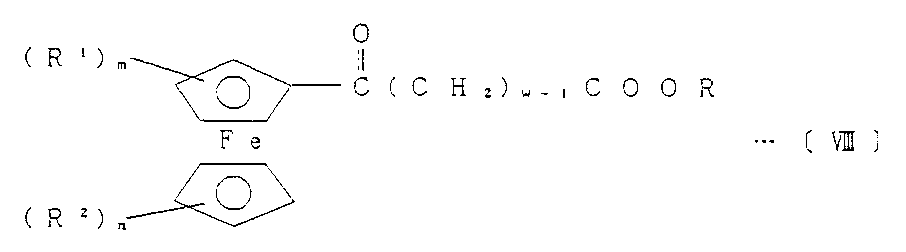
(wherein R¹, R², m, n and w are the same as described above), then hydrolyzing to obtain the corresponding carboxylic acid, and then reducing or alternatively reducing and then hydrolyzing.

The ferrocene derivatives of the present invention as represented by the general formula (I) or (II) can be produced as described above. In production of these ferrocene derivatives, the polyethylene glycol of the general formula (III) can be replaced by similar polyethers. Extraction treatment after the reaction can be carried out using alcohol, THF and the like, and purification can be carried out by chromato purification and so forth.

The ferrocene derivatives represented by the general formula (I) or (II) as obtained by the method as described above are effective as surfactants and can be used particularly as surfactants (micelle forming agents) to make hydrophobic organic substances soluble in water or an aqueous medium.

The surfactants of the present invention contain the ferrocene derivatives of the general formula (I) or (II) as the major component, and other various additives can be added, if necesary. Use of the surfactants of the present invention permits to make various hydrophobic organic substances soluble in water or an aqueous medium. There are various hydrophobic organic substances. Examples are coloring matters and organic coloring matters for light memory, e.g. phthalocyanine, phthalocyanine derivatives, metal complexes of phthalocyanine, metal complexes of phthalocyanine derivatives, naphthalocyanine, naphthalocyanine derivatives, metal complexes of naphthalocyanine, metal complexes of naphthalocyanine derivatives, porphyrin, porphyrin derivatives (tetraphenylporphyrin and the like), metal complexes of porphyrin, and metal complexes of porphyrin derivatives; electrochromic materials, e.g. 1,1'-diheptyl-4,4'-bipyridinium dibromide, and 1,1'-didodecyl-4,4'-bipyridinium dibromide; light-sensitive materials (photochromic materials) and light sensor materials, e.g. 6-nitro-1,3,3-trimethylspiro-(2'H-1'-benzopyran-2,2'-indoline) (commonly called spiropyran); liquid crystal display coloring matters, e.g. p-azoxyanisole; organic electrically conductive materials and gas sensor materials, e.g. a 1:1 complex of 7,7,8,8-tetracyanoquinonedimethane (TCNQ) and tetrathiafulvalene (TTF); light-curable paints, e.g. pentaerythritol diacrylate; insulating materials, e.g. stearic acid, and diazo type light-sensitive materials and paints, e.g. 1-phenylazo-2-naphthol. Other examples include water-insoluble polymers, for example, general purpose polymers such as polycarbonate, polystyrene, polyethylene, polypropylene, polyamide, polyphenylene sulfide (PPS), polyphenylene oxide (PPO), and polyacrylonitrile (PAN), or polyphenylene, polypyrrole, polyaniline, polythiophene, acetyl cellulose, polyvinyl acetate, polyvinyl butyral and other various polymers (polyvinylpyridine and the like) or copolymers (a copolymer of methyl methacrylate and methacrylic acid, and the like).

In use of the ferrocene derivatives of the present invention as surfactants, there are various embodiments. Particularly in production of the organic thin film of the present invention, they are effectively used as micelle forming agents. In the process of the present invention, a surfactant (micelle forming agent) comprising a ferrocene derivative represented by the general formula (I) or (II), or a ferrocene derivative represented by the general formula (I'), a supporting salt, and a hydrophobic organic substance are placed in an aqueous medium and thoroughly dispersed by the use of supersonic waves, a homogenizer, or a stirrer, for example, to form a micelle. Thereafter, if necessary, an excessive hydrophobic organic substance is removed, and the micelle solution thus obtained is subjected to electrolytic treatment using the aforementioned electrode while allowing to stand or somewhat stirring. During the electrolytic treatment, the hydrophobic organic substance may be supplementarily added to the micelle solution, or there may be provided a recycle circuit in which the micelle solution in the vicinity of the anode is withdrawn out of the system, the hydrophobic organic substance is added to the withdrawn micelle solution and throughly stirred, and then the resulting solution is returned to the vicinity of the cathode. Electrolytic conditions are determined appropriately depending on various circumstances. Usually, the liquid temperature is 0 to 70°C and preferably 20 to 30°C, the voltage is 0.03 to 1.5 V and preferably 0.1 to 0.5 V, and the current density is not more than 10 mA/cm² and preferably 50 to 300 µA/cm².

On performing this electrolytic treatment, the reaction proceeds as illustrated in Fig. 1. Explaining in connection with the behavior of Fe ion in the ferrocene derivative, Fe²⁺ is converted into Fe³⁺ on an anode 5, leading to the breakdown of the micelle, and particles (about 600 to 900 Å) of a hydrophobic organic substance are deposited on the anode. On the other hand, on a cathode 6, Fe³⁺ oxided on the anode 5 is reduced to Fe²⁺, recovering the original micelle 3 and, therefore, a film forming operation can be carried out repeatedly using the same solution.

Electrolytic treatment as described above forms a thin film comprised of about 600 to 900 Å particles of the desired hydrophobic organic substance on the anode.

The supporting salt (supporting electrolyte) to be used in the process of the present invention is added, if necessary, in order to control the electrical conductance of the aqueous medium. The amount of the supporting salt added is usually about 10 to 300 times, preferably about 50 to 200 times that of the above surfactant (micelle forming agent). The type of the supporting salt is not critical as long as capable to control the electric conductance of the aqueous medium without inhibiting the formation of the micelle and the deposition of the above hydrophobic organic substance.

More specifically, sulfuric acid salts (salts such as lithium, potassium, sodium, rubidium or aluminum) and acetic acid salts (salts such as lithium, potassium sodium, rubidium beryllium, magnesium, potassium, strontium, barium or aluminum), which are generally widely used as supporting salts, are suitable.

The electrode to be used in the process of the present invention is sufficient to be a metal more noble than the oxidation potential (against +0.15 V saturated calomel electrode) of ferrocene, or an electrically conductive substance. More specifically, ITO (mixed oxide of indium oxide and tin oxide), platinum, gold, silver glassy carbon, electrically conductive metal oxides, electrically conductive organic polymers, and the like can be used.

### Example

The present invention is described in greater detail with reference to examples.

### Preparation Example 1

(1) 11-undecanic acid chloride prepared from 50.0 g of 11-bromoundecanic acid and 90.0 g of thionyl chloride, 37.6 g of anhydrous aluminum chloride, and 35.0 g of ferrocene were reacted at 5°C for 3 hours in a methylene chloride solvent. After the completion of the reaction, the reaction mixture was treated with diluted hydrochloric acid and then purified with a silica gel column to obtain 56.9 g of 10-bromo undecanyl ferrocenyl ketone represented by the following formula: 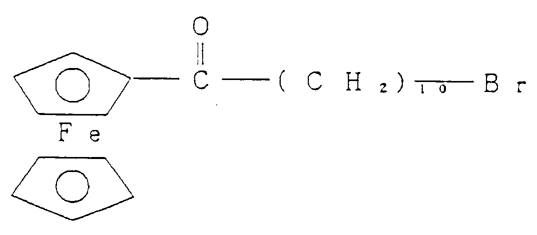
(2) In the presence of amalgam prepared from 65.4 g of zinc and 27.2 g of mercuric chloride, 56.9 g of 10-bromodecanyl ferrocenyl ketone prepared in (1) above was refluxed for 6 hours in a mixed solvent of concentrated hydrochloric acid and ethanol to perform a reduction reaction.
   After the completion of the reaction, the reaction mixture was extracted with ethyl acetate and purified on a silica gel column to obtain 42.1 g of 1-ferrocenyl-11-bromoundecane represented by the following formula:

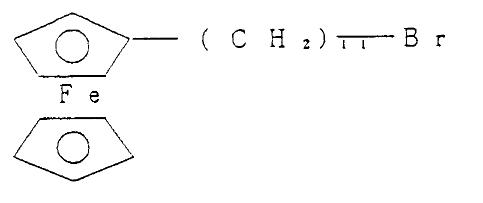

### Example 1

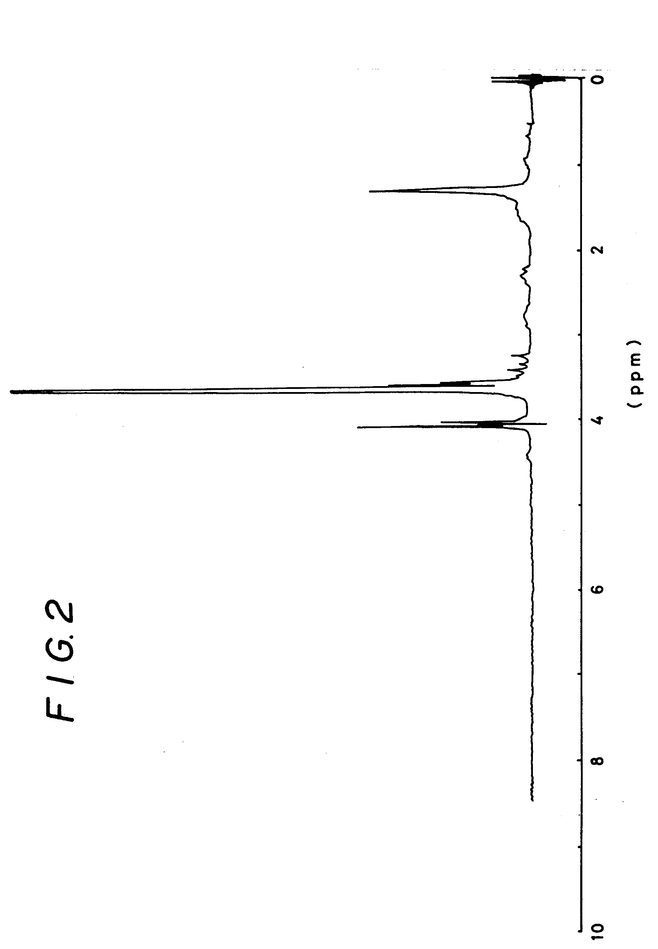

0.064 g of metallic sodium was added to 6.5 g of polyethylene glycol (average molecular weight, 600) and stirred at 70°C for one day and night. Then, 1.1 g of 1-ferrocenyl-11-bromoundecane (obtained in Preparation Example 1) was added thereto and reacted at 110°C for 10 hours. This reaction mixture was extracted with a mixture of equal amounts of water and n-butanol. The extract was washed with water and then was subjected to chromatographic purification by developing on a silica gel column using a mixture of benzene and ethanol (benzene: ethanol=5:1) as a solvent. For the purified product obtained after drying, the yield was 41% and the amount was 0.96 g. The elemental analytical values were: carbon, 60.21%; hydrogen, 9.46%; nitrogen, 0.00%. The results of measurement of proton nuclear magnetic resonance spectrum (¹H-NMR) were as shown in Fig. 2.

From the above results, it can be seen that the above purified product was a ferrocene derivative having the following structure.

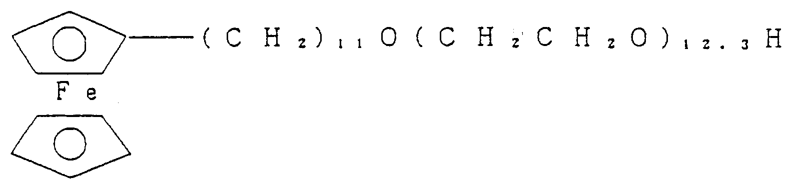

### Example 2

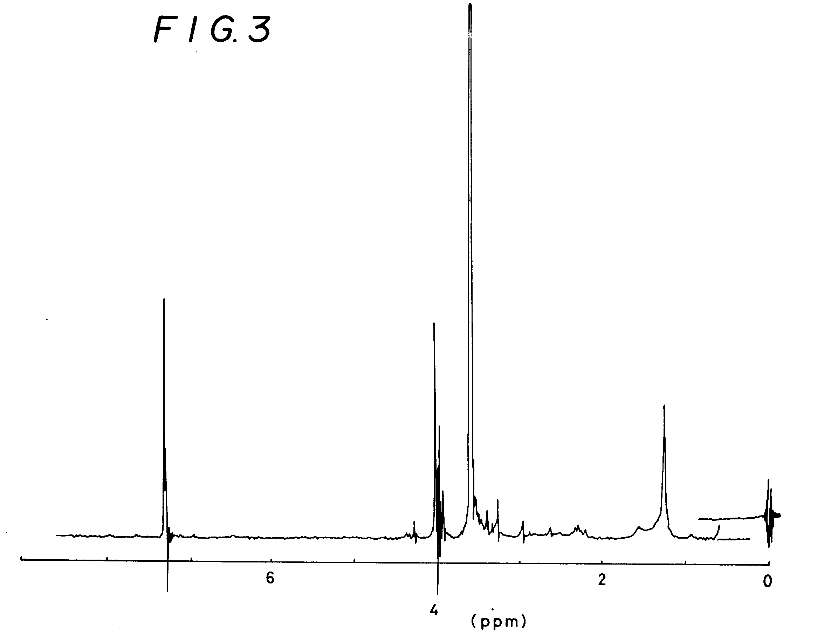

The procedure of Example 1 was repeated with the exception that polyethylene glycol having an average molecular weight of 1,000 was used as the polyethylene glycol. For the purified product obtained, the yield was 31% and the amount was 2.15 g. The results of ¹H-NMR measurement were as shown in Fig. 3.

From the above results, it can be seen that the above purified product was a ferrocene derivative having the following structure:

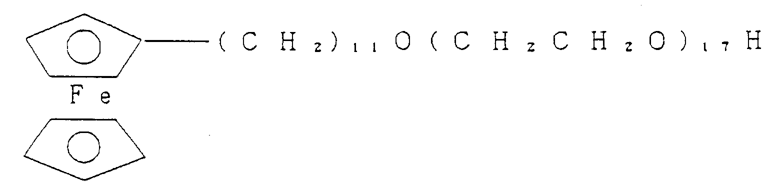

### Preparation Example 2

(1) In the presence of 9.6 g of anhydrous aluminum chloride, 13.5 g of ferrocene and 19.9 g of 11-ethoxycarbonylundecanic acid chloride (known as described in J. Amer. Chem. Soc., 69, 2350 (1947)) were reacted at room temperature for 2 hours in a methylene chloride solvent.
   After the completion of the reaction, the reaction mixture was treated with diluted hydrochlorice acid and then purified with a silica gel column to obtain 13.7 g of ethyl ferrocenoylundecanate represented by the following formula: 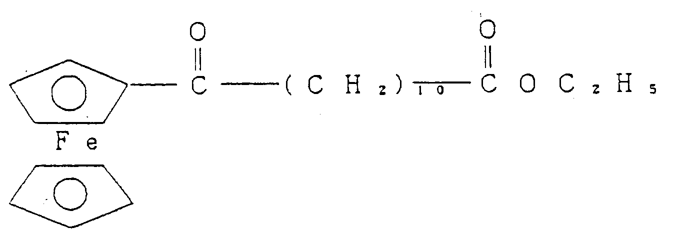
(2) 12.4 g of ethyl ferrocenoylundecanate prepared in (1) above and 2.9 g of potassium hydroxide were refluxed for 2 hours in an ethanol solvent and then was subjected to acid treatment to obtain 11.3 g of ferrocenoylundecanic acid represented by the following formula: 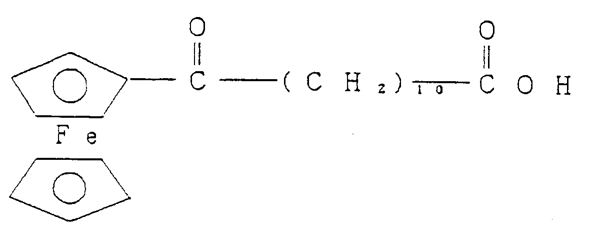
(3) In the presence of zinc amalgam prepared from 6.5 g of zinc and 2.7 g of mercuric chloride, 6.0 g of ferrocenoylundecanic acid prepared in (2) above was reacted at 80°C for 3 hours in a mixed solvent of concentrated hydrochloric acid and ethanol.
   After the completion of the reaction, the reaction mixture was extracted with ethyl acetate and purified with a silica gel column to obtain 4.8 g of ferrocenyldodecanic acid represented by the following formula:

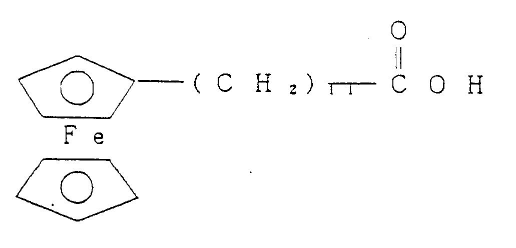

### Example 3

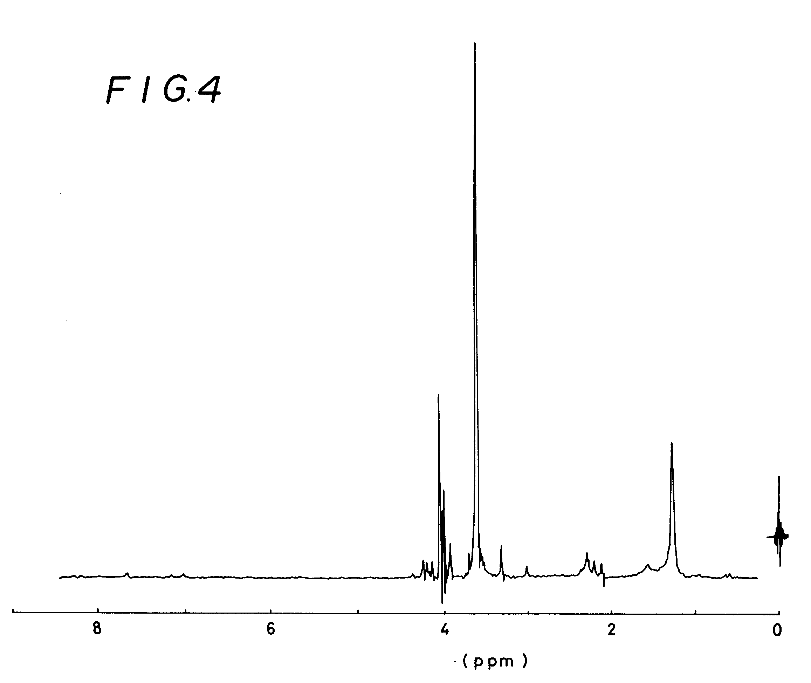

The procedure of Example 1 was repeated with the exception that 6 g of polyethylene glycol (average molecular weight, 600) and 0.1 cc of concentrated sulfuric acid were added to 0.29 g of ferrocenyldodecanic acid (obtained in Preparation Example 2) and reacted at 80°C for 6 hours. For the purified product obtained, the yield was 62% and the amount was 0.44 g. The results of ¹H-NMR measurement were as shown in Fig. 4.

From the above results, it can be seen that the above purified product was a ferrocene derivative having the following structure:

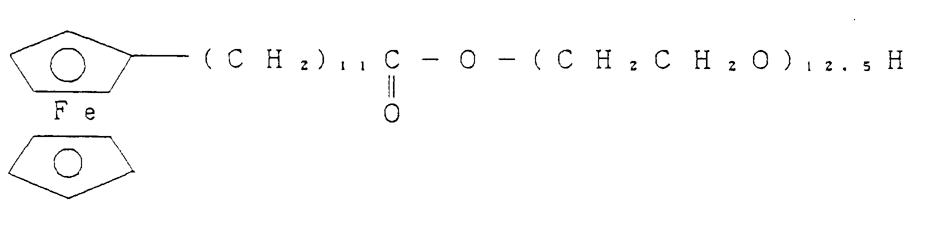

### Preparation Example 3

(1) In the same manner as in Preparation Example 2 (1) except that in place of 11-ethoxycarbonylundecanic acid chloride shown in Preparation Example 2 (1), 35.0 g of 10-ethoxycarbonyldecanic acid chloride was used, and 17.7 g of anhydrous aluminum chloride was used and 24.7 g of ferrocene was reacted; 23.0 g of ethyl ferrocenoyldecanate represented by the formula shown below was obtained. 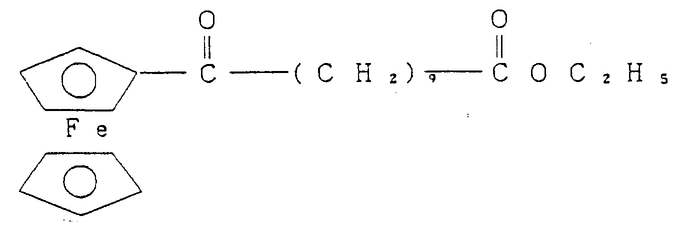
(2) In the same manner as in Preparation Example 2 (2) except that in place of ethyl ferrocenoylundecanate shown in Preparation Example 2 (2), 5.0 g of ethyl ferrocenoyldecanate (obtained in (1) above) was used, and 1.2 g of potassium hydroxide was used; 4.7 g of ferrocenoyldecanic acid represented by the formula shown below was obtained. 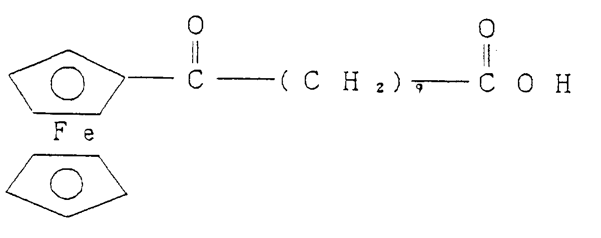
(3) In the same manner as in Preparation Example 2 (3) except that in place of ferrocenoylundecanic acid shown in Preparation Example 2 (3), 4.7 g of ferrocenoyldecanic acid (obtained in (2) above) was used, and 6.6 g of zinc and 2.7 g of mercuric chloride were used; 3.4 g of ferrocenylundecanic acid represented by the formula shown below was obtained.

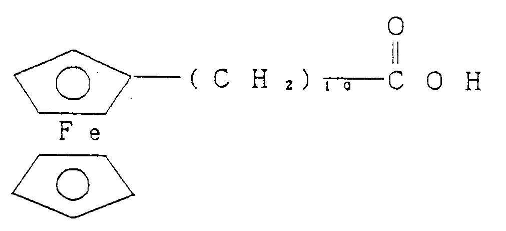

### Example 4

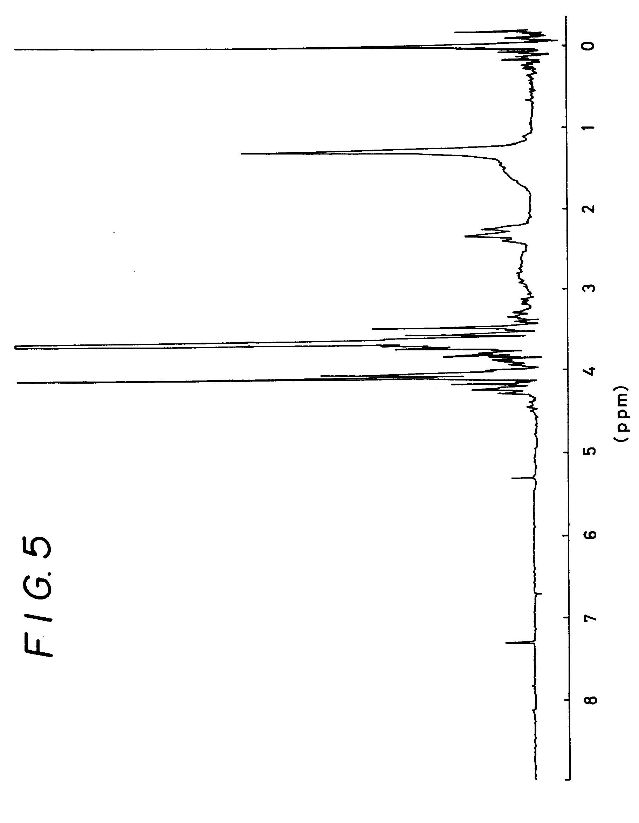

The procedure of Example 1 was repeated with the exception that 39.14 g of polyethylene glycol (average molecular weight, 600) and 0.1 cc of concentrated sulfuric acid were added to 3.02 g of ferrocenylundecanic acid obtained in Preparation Example 3, and reacted at 80°C for 6 hours. For the purified product obtained, the yield was 51.5% and the amount was 4.00 g. The results of ¹H-NMR measurement were as shown in Fig. 5. Elemental analytical values were as follows:

| Carbon | Hydrogen | Nitrogen (%) |
|---|---|---|
| 61.03 | 8.68 | 0.00 |
| 59.82 | 8.71 | 0.00 (Calculated) |

From the above results, it can be seen that the above purified product was a ferrocene derivative having the following structure.

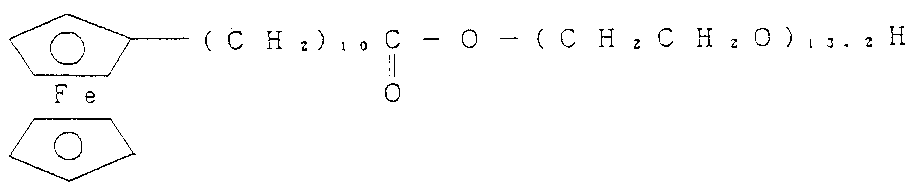

### Preparation Example 4

(1) In the same manner as in Preparation Example 2 (1) except that in place of 11-ethoxycarbonylundecanic acid chloride shown in Preparation Example 2 (1), 19.3 g of 9-ethoxycarbonylnonanic acid chloride was used, and 10.4 g of anhydrous aluminum chloride was used and reacted with 14.0 g of ferrocene; 23.4 g of ethyl ferrocenoylnonanate represented by the formula shown below was obtained. 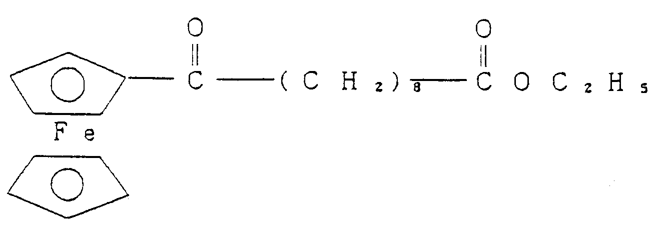
(2) In the same manner as in Preparation Example 2 (2) except that in place of ethyl ferrocenoylundecanate shown in Preparation Example 2 (2), 20.5 g of ethyl ferrocenoylnonanate (obtained in (1) above) was used, and 5.1 g of potassium hydroxide was used; 19.7 g of ferrocenoylnonanic acid represented by the formula shown below was obtained. 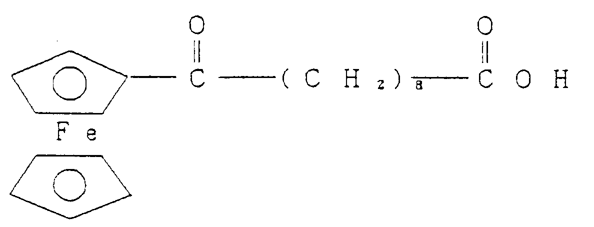
(3) In the same manner as in Preparation Example 2 (3) except that in place of ferrocenoylundecanic acid shown in Preparation Example 2 (3), 11.1 g of ferronoylnonanic acid (obtained in (2) above) was used, and 13.1 g of zinc and 5.5 g of mercuric chloride were used; 8.3 g of ferrocenyldecanic acid represented by the formula shown below was obtained.

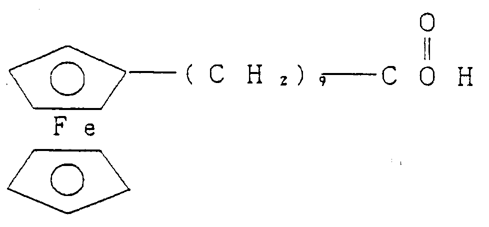

### Example 5

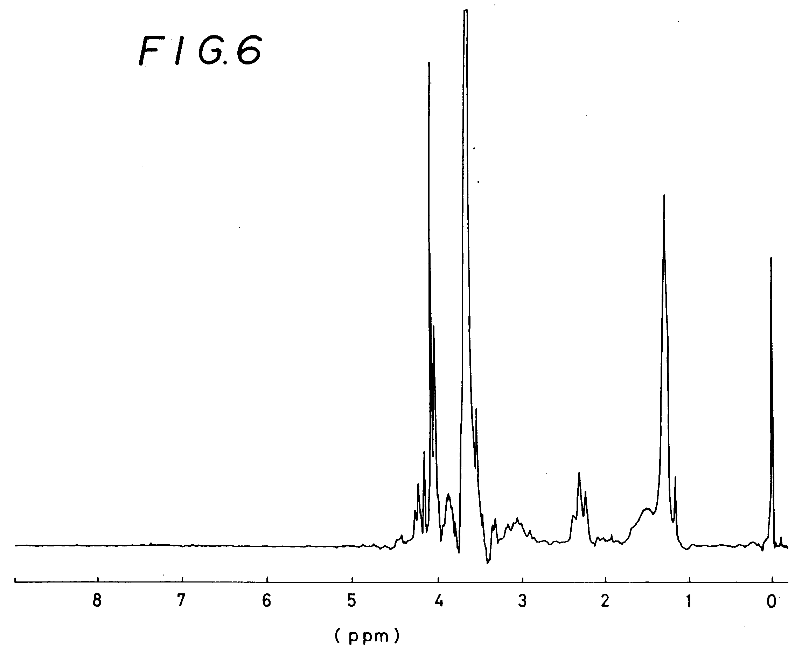

The procedure of example 1 was repeated with the exception that 82.7 g of polyethylene glycol (average molecular weight, 600) and 0.1 cc of concentrated sulfuric acid were added to 8.19 g of ferrocenyldecanic acid obtained in Preparation Example 4 and reacted at 80°C for 6 hours. For the purified product obtained, the yield was 49.2% and the amount was 10.60 g. The results of ¹H-NMR measurement were as shown in Fig. 6. Elemental analytical values were as follows:

| Carbon | Hydrogen | Nitrogen (%) |
|---|---|---|
| 60.02 | 8.63 | 0.00 |
| 59.43 | 8.63 | 0.00 (Calculated) |

From the above results, it can be seen that the above purified product was a ferrocene derivative having the following structure:

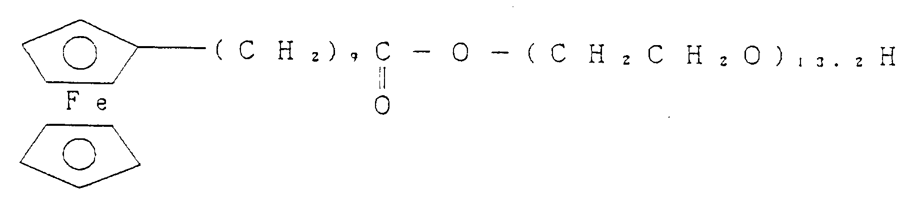

### Preparation Example 5

(1) In the same manner as in Preparation Example 2 (1) except that in place of 11-ethoxycarbonylundecanic acid chloride shown in Preparation Example 2 (1), 29.0 g of 5-ethoxycarbonylvaleric acid chloride was used, and 32.4 g of anhydrous aluminum chloride was used and reacted with 45.2 g of ferrocene; 44.1 g of ethyl ferrocenoylvalerate represented by the formula shown below was obtained. 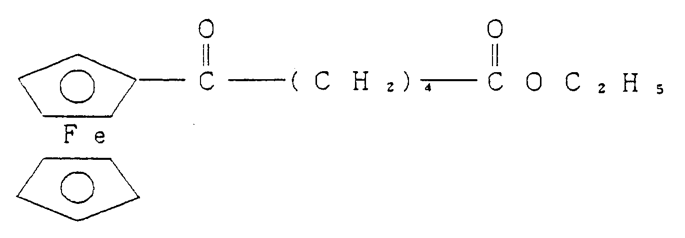
(2) In the same manner as in Preparation Example 2 (2) except that in place of ferrocenoylundecanic acid shown in Preparation Example 2 (2), 44.1 g of ethyl ferrocenoylvalerate (obtained in (1) above), and 13.3 g of potassium hydroxide was used; 36.0 g of ferrocenoylvaleric acid represented by the formula shown below was obtained. 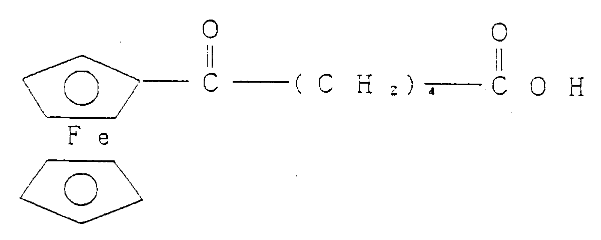
(3) In the same manner as in Preparation Example 2 (3) except that in place of ferrocenoylundecanic acid shown in Preparation Example 2 (3), 9.4 g of ferrocenoylvaleric acid (obtained in (2) above) was used, and 13.1 g of zinc and 5.5 g of mercuric chloride were used; 6.9 g of ferrocenylhexanic acid represented by the formula shown below was obtained.

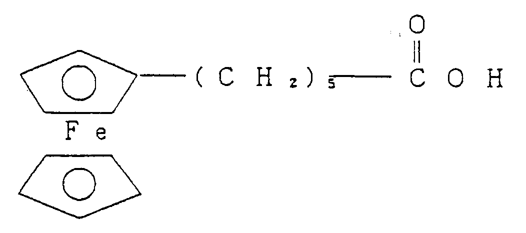

### Example 6

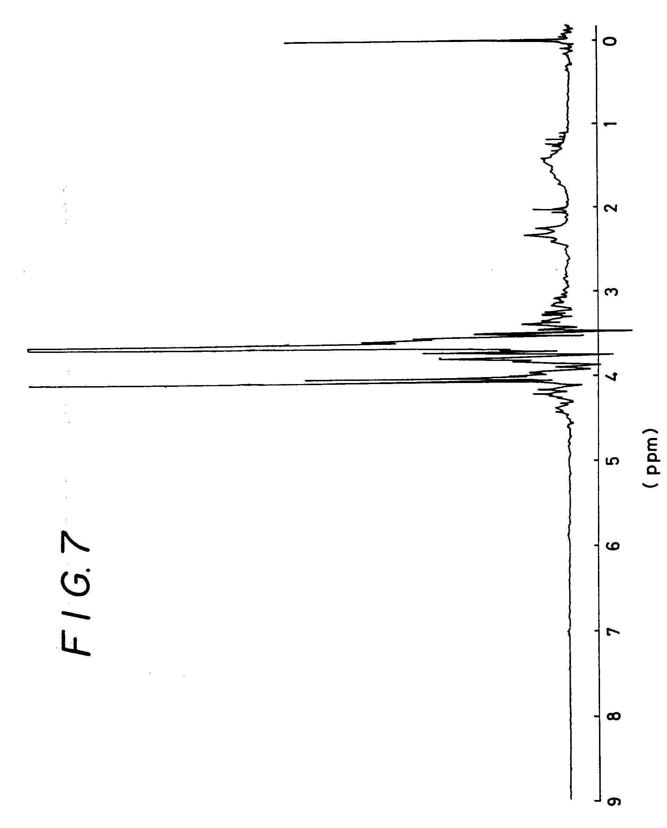

The procedure of Example 1 was repeated with the exception that 184.80 g of polyethylene glycol (average molecular weight, 1,000) and 0.1 cc of concentrated sulfuric acid were added to 6.90 g of ferrocenylhexanic acid obtained in Preparation Example 5 and reacted at 80°C for 6 hours. For the purified product obtained, the yield was 39.5% and the amount was 11.68 g. The results of ¹H-NMR measurement were as shown in Fig. 7. Elemental analytical values were as follows:

| Carbon | Hydrogen | Nitrogen (%) |
|---|---|---|
| 56.25 | 9.38 | 0.00 |
| 56.85 | 9.40 | 0.00 (Calculated) |

From the above results, it can be seen that the above purified product was a ferrocene derivative having the following structure:

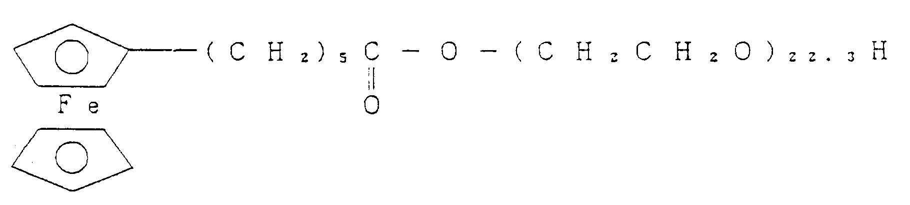

### Preparation Example 6

(1) In the same manner as in Preparation Example 2 (1) except that 16.0 g of octamethylferrocene (known as described in Chem. Ztg., 1976, 100 (3), 143 (Ger)) was used in place of ferrocene shown in Preparation Example 2 (1), 13.3 g of 9-ethoxycarbonylnonanic acid chloride was used in place of 11-ethoxycarbonylundecanic acid chloride, and further 7.2 g of anhydrous aluminum chloride was used and reacted with 16.1 g of ferrocene; 6.4 g of ethyl octamethylferrocenoylnonanate represented by the formula shown below was obtained. 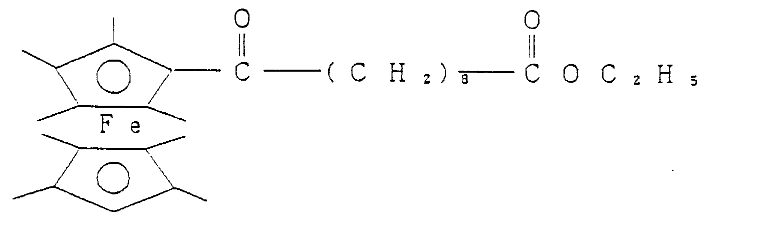
(2) In the same manner as in Preparation Example 2 (2) except that in place of ethyl ferrocenoylundecanate shown in Preparation Example 2 (2), 6.4 g of ethyl octamethylferrocenoylnonanate (obtained in (1) above) was used, and 1.1 g of potassium hydroxide was used; 6.0 g of octamethylferrocenoylnonanic acid represented by the formula shown below was obtained. 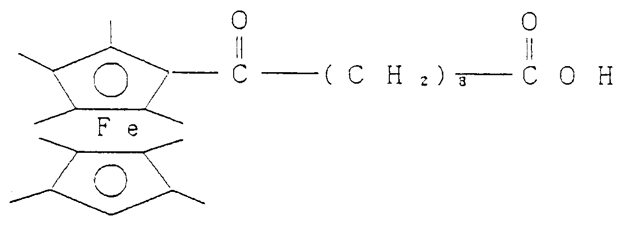
(3) In the same manner as in Preparation Example 2 (3) except that in place of ferrocenoylundecanic acid shown in Preparation Example 2 (3), 6.0 g of octamethylferrocenoylnonanic acid (obtained in (2) above) was used, and 8.1 g of zinc and 3.3 g of mercuric chloride were used; 2.1 g of octamethylferrocenyldecanic acid represented by the formula shown below was obtained.

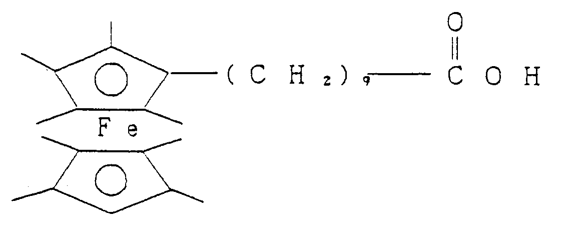

### Example 7

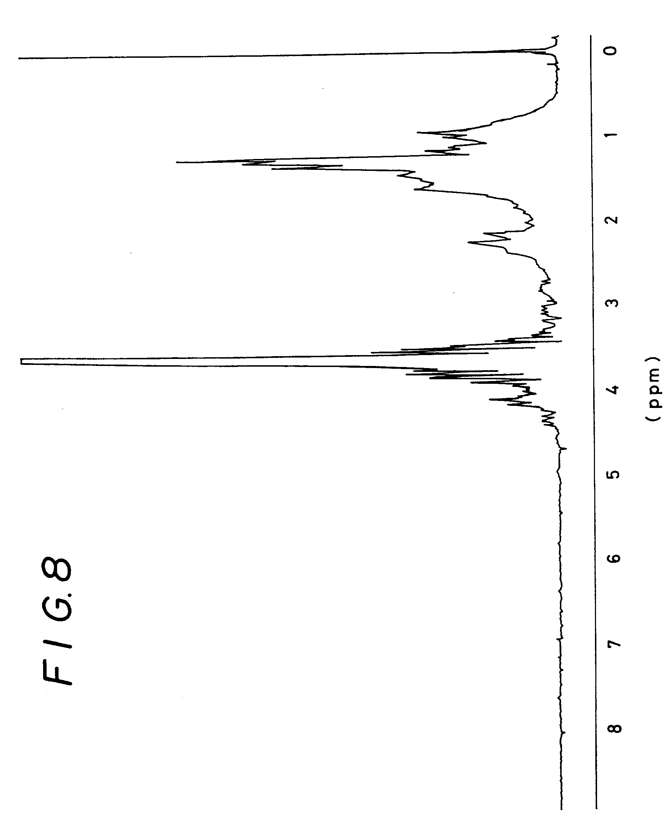

The procedure of Example 1 was repeated with the exception that 86.64 g of polyethylene glycol (average molecular weight, 2,000) and 0.1 cc of concentrated sulfuric acid were added to 2.03 g of octamethylferrocenyldecanic acid obtained in Preparation Example 6 and reacted at 80°C for 6 hours. For the purified product obtained, the yield was 15.2% and the amount was 1.61 g. The results of ¹H-NMR measurement were as shown in Fig. 8. Elemental analytical values were as follows:

| Carbon | Hydrogen | Nitrogen (%) |
|---|---|---|
| 58.51 | 9.23 | 0.00 |
| 57.84 | 9.15 | 0.00 (Calculated) |

From the above results, it can be seen that the above purified product was a ferrocene derivative having the following structure.

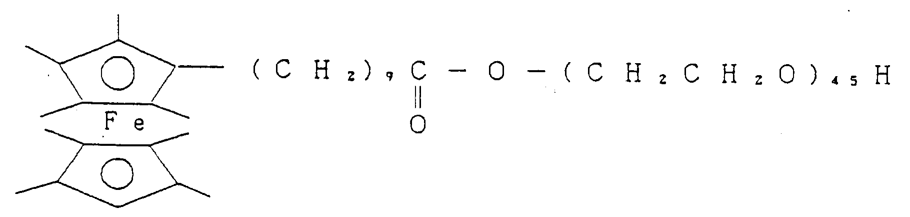

### Example 8

1.13 g of the ferrocene derivative obtained in Example 1 was added to 31.5 ml of water as a surfactant (micelle forming agent), and 10 mg of phthalocyanine was added and dispersed or dissolved by stirring for 10 minutes by the use of supersonic waves. The resulting mixture was stirred for two days and nights with a stirrer, and the micelle solution thus obtained was subjected to centrifugal separation at 2,000 rpm for one hour. A visible absorption spectrum of the supernatant is shown in Fig. 9 (Curve A). This confirmed that phthalocyanine was soluble in the micelle solution. The solubility was 4.4 mM/4 mM micelle forming agent solution.

### Example 9

The procedure of Example 8 was repeated with the exception that phthalocyanine iron complex was used in place of phthalocyanine. A visible absorption spectrum of the supernatant is shown in Fig. 9 (Curve B). This confirmed that the phthalocyanine was soluble in the micelle solution. The solubility was 0.72 mM/4 mM micelle forming agent solution.

### Example 10

The procedure of Example 8 was repeated with the exception that phthalocyanine cobalt complex was used in place of phthalocyanine. A visible absorption spectrum of the supernatant is shown in Fig. 9 (Curve C). This confirmed that the phthalocyanine was soluble in the micelle solution. The solubility was 0.22 mM/4 mM micelle forming agent solution.

### Example 11

The procedure of Example 8 was repeated with the exception that phthalocyanine copper complex was used in place of phthalocyanine. A visible absorption spectrum of the supernatant is shown in Fig. 9 (Curve D). This confirmed that the phthalocyanine was soluble in the micelle solution. The solubility was 0.11 mM/4 mM micelle forming agent solution.

### Example 12

The procedure of Example 8 was repeated with the exception that phthalocyanine zinc complex was used in place of phthalocyanine. A visible absorption spectrum of the supernatant is shown in Fig. 9 (Curve E). This confirmed that the phthalocyanine was soluble in the micelle solution. The solubility was 0.41 mM/4 mM micelle forming agent solution.

### Example 13

0.22 g of lithium sulfate (Li₂SO₄) was added to 10 ml of the micelle solution prepared in Example 8 to prepare a 0.44 mM phthalocyanine/2 mM micelle forming agent/0.2 M lithium sulfate solution. Using this solution as an electrolyte, and ITO as an anode, platinum as a cathode and a saturated calomel electrode as a reference electrode, constant-electric potential electrolysis of applied voltage 0.5 V and current 7 µA was carried out at 25°C for 2 hours. As a result, a coloring matter thin film having primary particles 1,000 Å in average particle diameter was formed on the ITO. A scanning electron microscope (SEM) photograph (magnification: 20,000; using JSM-T220 produced by Nippon Denshi Co., Ltd.) of the coloring matter thin film is shown in Fig. 18. A visible absorption spectrum of the coloring matter thin film on ITO is shown in Fig. 10 (Curve A). By agreement of Fig. 10 (Curve A) with Fig. 9 (Curve A) in visible absorption spectrum, the coloring matter thin film on ITO was identified to be composed of phthalocyanine.

### Example 14

The procedure of Example 13 was repeated with the exception that the term of electrolysis time was changed to 40 minutes.

A visible absorption spectrum of the formed coloring matter thin film is shown in Fig. 10 (Curve A). By comparison of curve A with curve B in Fig. 10, it can be seen that the formed thin film had a small absorption spectrum as compared with Example 13 and the film thickness could be controlled by the electrolysis time.

### Example 15

0.193 g of the ferrocene derivative obtained in Example 3 was added to 100 cc of water as a surfactant (micelle forming agent), and 100 mg of phthalocyanine was added thereto and dispersed or dissolved by stirring for 10 minutes with supersonic waves. The mixture was further stirred for two days and nights with a stirrer, and then the micelle solution (dispersed solution) thus obtained was subjected to centrifugal separation at 2,000 rpm for 30 minutes. A visible absorption spectrum of the supernatant obtained is shown in Fig. 11 (Curve A). This confirmed that phthalocyanine was soluble (dispersed) in the micelle solution. The solubility was phthalocyanine 6.4 mM/2 mM micelle forming agent solution. To this solution, LiBr as a Supporting salt was added in such a manner that the concentration was 0.1 M and starred for 10 minutes with a stirrer.

Using the obtained solution as an electrolyte, and an ITO transparent glass electrode as an anode, platinum as a cathode and a saturated calomel electrode as a reference electrode, constant electric potential electrolysis of applied voltage 0.5 V and current density 45 µA/cm² was carried out at 25°C for 30 minutes. The amount of electricity passed in this case was 0.09 coulomb.

As a result, a thin film of phthalocyanine was obtained on the ITO transparent glass electrode. A visible absorption spectrum of phthalocyanine on the ITO transparent glass electrode is shown in Fig. 11 (Curve B). By agreement of Fig. 11 (Curve A) with Fig. 11 (Curve B), it was confirmed that the thin film on the ITO transparent glass electrode was phthalocyanine. An ultraviolet (UV) absorption spectrum showed that the thickness of the thin film was 0.31 µm.

An SEM photograph (magnification: 30,000; using JSM-T220 produced by Nippon Denshi Co., Ltd.) of the thin film obtained is shown in Fig. 19.

### Example 16

0.190 g of the ferrocene derivative obtained in Example 4 was added to 100 cc of water as a surfactant (micelle forming agent), and 100 mg of phthalocyanine was added thereto and dispersed or dissolved by stirring for 10 minutes with supersonic waves. The mixture was further stirred for two days and nights with a stirrer, and then the micelle solution (dispersed solution) thus obtained was subjected to centrifugal separation at 2,000 rpm for 30 minutes. A visible absorption spectrum of the supernatant obtained is shown in Fig. 12 (Curve A). This confirmed that phthalocyanine was soluble (dispersed) in the micelle solution. The solubility was phthalocyanine 7.8 mM/2 mM micelle forming agent solution. To this solution, LiBr as a supporting salt was added in such a manner that the concentration was 0.1 M and stirred for 10 minutes with a stirrer.

Using the obtained solution as an electrolyte, and an ITO transparent glass electrode as an anode, platinum as a cathode and a saturated calomel electrode as a reference electrode, constant electric potential electrolysis of applied voltage 0.5 V and current density 48 µA/cm² was carried out at 25°C for 30 minutes. The amount of electricity passed in this case was 0.09 coulomb.

As a result, a thin film of phthalocyanine was obtained on the ITO transparent glass electrode. A visible absorption spectrum of phthalocyanine on the ITO transparent glass electrode is shown in Fig. 12 (Curve B). By agreement of Fig. 12 (Curve A) with Fig. 12 (Curve B), it was confirmed that the thin film on the ITO transparent glass electrode was phthalocyanine. An UV absorption spectrum showed that the thickness of the thin film was 1.05 µm.

An SEM photograph (magnification: 30,000; using JSM-T220 produced by Nippon Denshi Co., Ltd.) of the thin film obtained is shown in Fig. 20.

### Example 17

0.187 g of the ferrocene derivative obtained in Example 5 was added to 100 cc of water as a surfactant (micelle forming agent), and 100 mg of phthalocyanine was added thereto and dispersed or dissolved by stirring for 10 minutes with supersonic waves. The mixture was further stirred for two days and nights with a stirrer, and then the micelle solution (dispersed solution) thus obtained was subjected to centrifugal separation at 2,000 rpm for 30 minutes. A visible absorption spectrum of the supernatant obtained is shown in Fig. 13 (Curve A). This confirmed that phthalocyanine was soluble (dispersed) in the micelle solution. The solubility was phthalocyanine 8.2 mM/2 mM micelle forming agent solution. To this solution, LiBr as a supporting salt was added in such a manner that the concentration was 0.1 M and stirred for 10 minutes with a stirrer.

Using the obtained solution as an electrolyte, and an ITO transparent glass electrode as an anode, platinum as a cathode and a saturated calomel electrode as a reference electrode, constant electric potential electrolysis of applied voltage 0.5 V and current density 72 µA/cm² was carried out at 25°C for 30 minutes. The amount of electricity passed in this case was 0.13 coulomb.

As a result, a thin film of phthalocyanine was obtained on the ITO transparent glass electrode. A visible absorption spectrum of phthalocyanine on the ITO transparent glass electrode is shown in Fig. 13 (Curve B). By agreement of Fig. 13 (Curve A) with Fig. 13 (Curve B), it was confirmed that the thin film on the ITO transparent glass electrode was phthalocyanine. An UV absorption spectrum showed that the thickness of the thin film was 1.85 µm.

An SEM photograph (magnification: 30,000; using JSM-T220 produced by Nippon Denshi Co., Ltd.) of the thin film obtained is shown in Fig. 21.

### Example 18

0.176 g of the ferrocene derivative obtained in Example 6 was added to 100 cc of water as a surfactant (micelle forming agent), and 100 mg of phthalocyanine was added thereto and dispersed or dissolved by stirring for 10 minutes with supersonic waves. The mixture was further stirred for two days and nights with a stirrer, and then the micelle solution (dispersed solution) thus obtained was subjected to centrifugal Separation at 2,000 rpm for 30 minutes. A visible absorption spectrum of the Supernatant obtained is shown in Fig. 14 (Curve A). This confirmed that phthalocyanine was soluble (dispersed) in the micelle solution. The solubility was phthalocyanine 1.8 mM/2 mM micelle forming agent solution. To this solution, LiBr as a Supporting salt was added in such a manner that the concentration was 0.1 M and stirred for 10 minutes with a stirrer.

Using the obtained solution as an electrolyte, and an ITO transparent glass electrode as an anode, platinum as a cathode and a saturated calomel electrode as a reference electrode, constant electric potential electrolysis of applied voltage 0.5 V and current density 17 µA/cm² was carried out at 25°C for 30 minutes. The amount of electricity passed in this case was 0.04 coulomb.

As a result, a thin film of phthalocyanine was obtained on the ITO transparent glass electrode. A visible absorption Spectrum of phthalocyanine on the ITO transparent glass electrode is shown in Fig. 14 (Curve B). By agreement of Fig. 14 (Curve A) with Fig. 14 (Curve B), it was confirmed that the thin film on the ITO transparent glass electrode was phthalocyanine. An UV absorption spectrum showed that the thickness of the thin film was 0.04 µm.

### Example 19

0.210 g of the ferrocene derivative obtained in Example 7 was added to 100 cc of water as a surfactant (micelle forming agent), and 100 mg of phthalocyanine was added thereto and dispersed or dissolved by stirring for 10 minutes with supersonic waves. The mixture was further stirred for two days and nights with a stirrer, and then the micelle solution (dispersed solution) thus obtained was subjected to centrifugal separation at 2,000 rpm for 30 minutes. A visible absorption spectrum of the supernatant obtained is shown in Fig. 15 (Curve A). This confirmed that phthalocyanine was soluble (dispersed) in the micelle solution. The solubility was phthalocyanine 4.0 mM/2 mM micelle forming agent solution. To this solution, LiBr as a Supporting salt was added in such a manner that the concentration was 0.1 M and stirred for 10 minutes with a stirrer.

Using the obtained solution as an electrolyte, and an ITO transparent glass electrode as an anode, platinum as a cathode and a saturated calomel electrode as a reference electrode, constant electric potential electrolysis of applied voltage 0.5 V and current density 124 µA/cm² was carried out at 25°C for 30 minutes. The amount of electricity passed in this case was 0.23 coulomb.

As a result, a thin film of phthalocyanine was obtained on the ITO transparent glass electrode. A visible absorption spectrum of phthalocyanine on the ITO transparent glass electrode is shown in Fig. 15 (Curve B). By agreement of Fig. 15 (Curve A) with Fig. 15 (Curve B), it was confirmed that the thin film on the ITO transparent glass electrode was phthalocyanine. An UV absorption Spectrum showed that the thickness of the thin film was 4.6 µm.

### Example 20

0.188 g of the ferrocene derivative obtained in Example 1 was added to 100 cc of water as a surfactant (micelle forming agent), and 100 mg of phthalocyanine iron complex was added and dispersed or dissolved by stirring for 10 minutes with supersonic waves. The mixture was further stirred for two days and nights with a stirrer, and then the micelle solution (dispersed solution) thus obtained was subjected to centrifugal separation at 2,000 rpm for 30 minutes. A visible absorption spectrum of the supernatant obtained is shown in Fig. 16 (Curve A). This confirmed that the phthalocyanine iron complex was soluble (dispersed) in the micelle solution. The solubility was phthalocyanine iron complex 4.1 mM/2 mM micelle forming agent solution. To this solution, LiBr as a supporting salt was added in such a manner that the concentration was 0.1 M and stirred for 10 minutes with a stirrer.

Using the obtained solution as an electrolyte, and an ITO transparent glass electrode as an anode, platinum as a cathode and a saturated calomel electrode as a reference electrode, constant electric potential electrolysis of applied voltage 0.5 V and current density 14 µA/cm² was carried out at 25°C for 30 minutes.

As a result, a thin film of phthalocyanine iron complex was obtained on the ITO transparent glass electrode. A visible absorption spectrum of the phthalocyanine iron complex on the ITO transparent glass electrode is shown in Fig. 16 (Curve B). Because of agreement of Fig. 16 (Curve A) with Fig. 16 (Curve B), it was confirmed that the thin film on the ITO transparent glass electrode was the phthalocyanine iron complex. An UV absorption spectrum showed that the thickness of the thin film was 0.16 µm.

### Example 21

0.188 g of the ferrocene derivative obtained in Example 1 was added to 100 cc of water as a surfactant (micelle forming agent), and 100 mg of phthalocyanine copper complex was added thereto and dispersed or dissolved by stirring for 10 minutes with supersonic waves. The mixture was further stirred for two days and nights with a stirrer, and then the micelle solution (dispersed solution) thus obtained was subjected to centrifugal separation at 2,000 rpm for 30 minutes. A visible absorption Spectrum of the supernatant obtained is shown in Fig. 17 (Curve A). This confirmed that phthalocyanine copper complex was soluble (dispersed) in the micelle solution. The solubility was phthalocyanine copper complex 3.8 mM/2 mM micelle forming agent solution. To this solution, LiBr as a supporting salt was added in such a manner that the concentration was 0.1 M and stirred for 10 minutes with a stirrer.

Using the obtained solution as an electrolyte, and an ITO transparent glass electrode as an anode, platinum as a cathode and a saturated calomel electrode as a reference electrode, constant electric potential electrolysis of applied voltage 0.5 V and current density 43 µA/cm² was carried out at 25°C for 30 minutes. The amount of electricity passed in this case was 0.11 coulomb.

As a result, a thin film of phthalocyanine copper complex was obtained on the ITO transparent glass electrode. A visible absorption spectrum of the phthalocyanine copper complex on the ITO transparent glass electrode is shown in Fig. 17 (Curve B). Because of agreement of Fig. 17 (Curve A) with Fig. 17 (Curve B), it was confirmed that the thin film on the ITO transparent glass electrode was the phthalocyanine copper complex. An UV absorption spectrum showed that the thickness of the thin film was 0.08 µm.

### Industrial Applicability

The ferrocene derivatives of the present invention are novel compounds and can be used in various applications, for example, as surfactants (micelle forming agents), catalysts, auxiliary fuels, depressors or dispersants. The novel ferrocene dervatives, when used particularly as surfactants, form micelles in an aqueous solution system and, therefore, coloring matters such as phthalocyanine, having a wide variety of applications and various hydrophobic polymers are made soluble. In accordance with the process of the present invention in which the above surfactant (micelle forming agent) is used and at the same time, gathering or scattering of the micelles is utilized, an organic thin film having a greatly small film thickness can be formed.

## Claims

1. A ferrocene derivative represented by the general formula: 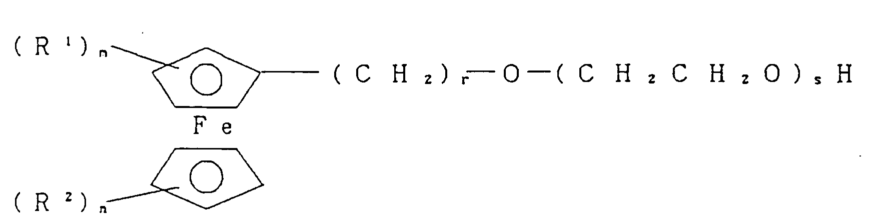 (wherein R¹ and R² are independently hydrogen, a methyl group, an ethyl group, a methoxy group or a carbomethoxy group, m is an integer of 1 to 4, n is an integer of 1 to 5, r is an integer of 11 to 18, and s is a real number of 2.0 to 70.0) or the general formula: 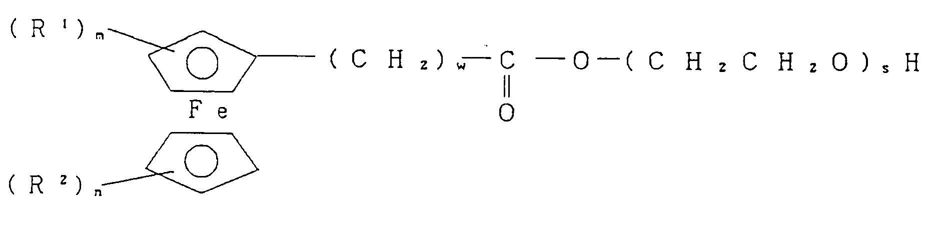 (wherein w is an integer of 2 to 20, and R¹, R², m, n and s are the same as described above).

2. A surfactant containing a ferrocene derivative of Claim 1.

3. A process for producing an organic thin film which comprises making a hydrophobic organic substance soluble in an aqueous medium by the use of a surfactant containing a ferrocene derivative of Claim 1 and electrolyzing the micelle solution obtained to form a thin film of the above hydrophobic organic substance on an electrode.

## Patentansprüche

1. Ferrocenderivat, dargestellt durch die allgemeine Formel: 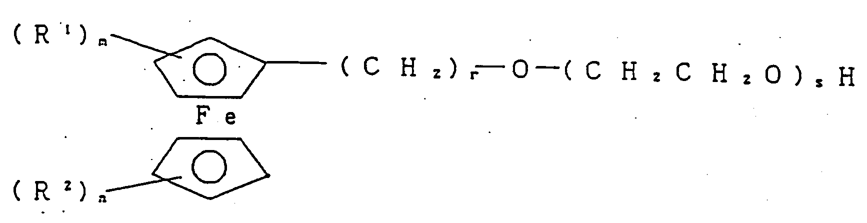 (worin R¹ und R² unabhängig Wasserstoff, eine Methylgruppe, eine Ethylgruppe, eine Methoxygruppe oder eine Carbomethoxygruppe sind, m eine ganze Zahl von 1 bis 4 ist, n eine ganze Zahl von 1 bis 5 ist, r eine ganze Zahl von 11 bis 18 ist und s eine reelle Zahl von 2,0 bis 70,0 ist) oder der allgemeinen Formel: 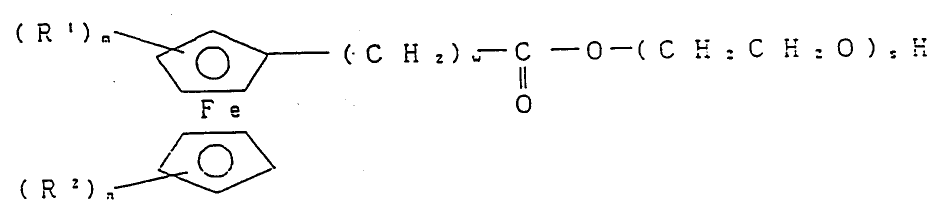 (worin w eine ganze Zahl von 2 bis 20 ist, und R¹, R², m, n und s die gleichen wie oben beschrieben sind).

2. Oberflächenaktives Mittel, das das Ferrocenderivat nach Anspruch 1 enthält.

3. Verfahren zur Herstellung eines organischen Dünnfilmes, das umfaßt: Löslichmachung einer hydrophoben organischen Substanz in einem wäßrigen Medium unter Verwendung eines grenzflächenaktiven Mittels, das ein Ferrocenderivat nach Anspruch 1 enthält, und Elektrolysieren der erhaltenen Micelllösung um einen Dünnfilm der obigen hydrophoben organischen Substanz auf einer Elektrode zu erhalten.

## Revendications

1. Dérivé de ferrocène représenté par la formule générale: 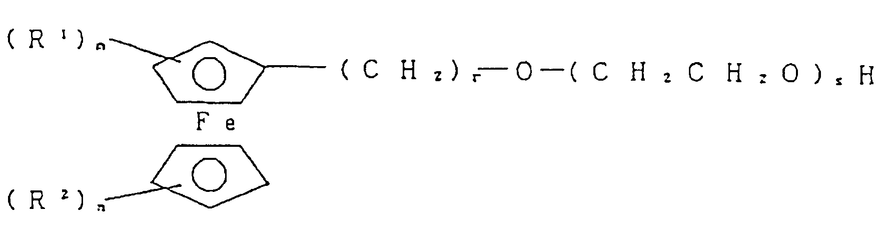 (dans laquelle R¹ et R² sont indépendamment un atome d'hydrogène, un groupe méthyle, un groupe éthyle, un groupe méthoxy ou un groupe carbométhoxy, m est un nombre entier de 1 à 4, n est un nombre entier de 1 à 5, r est un nombre entier de 11 à 18 et s est un nombre réel de 2,0 à 70,0) ou la formule générale: 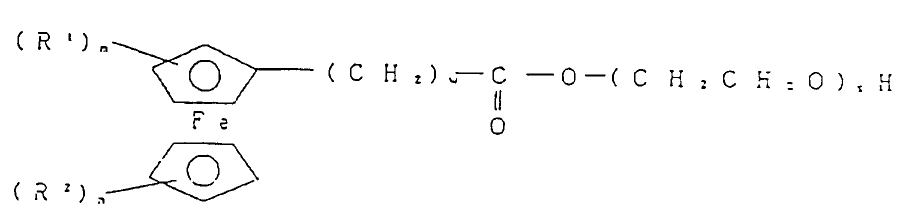 (dans laquelle w est un nombre entier de 2 à 20, et R¹, R², m, n et s sont identiques à ceux décrits ci-dessus).

2. Tensio-actif contenant un dérivé de ferrocène selon la revendication 1.

3. Procédé pour produire un film mince organique qui consiste à rendre une matière organique hydrophobe soluble dans un milieu aqueux en utilisant un tensio-actif contenant un dérivé de ferrocène selon la revendication 1, et à électrolyser la solution de micelles obtenue pour former un film mince de la matière organique hydrophobe ci-dessus sur une électrode.
